# EUROPÄISCHE PATENTANMELDUNG

(11) **EP 1 235 078 A2**
(43) Veröffentlichungstag der Anmeldung: **28.08.2002**
(21) Anmeldenummer: 01129146.5
(22) Anmeldetag: 08.12.2001
(51) Int. Cl.: G01S 7/40

(54) **Verfahren zum Erkennen gestörter Zustände einer Radareinrichtung und Radareinrichtung**

(30) Priorität: 22.02.2001 DE 10108582
(71) Anmelder: ROBERT BOSCH GMBH, 70442 Stuttgart (DE)
(72) Erfinder: Voigtlaender, Klaus, 73117 Wangen (DE); Schaumann, Arno, 71638 Ludwigsburg (DE)

(57) **Zusammenfassung**

Die Erfindung betrifft ein Verfahren zum Erkennen gestörter Zustände einer Radareinrichtung mit den Schritten: Erkennen von Unregelmäßigkeiten beim Empfang von Signalen, Deaktivieren des Sendezweigs und Erkennen der Anoder Abwesenheit von Zielsignalen. Die Erfindung betrifft ferner eine Radareinrichtung.

## Beschreibung

Die Erfindung betrifft ein Verfahren zum Erkennen gestörter Zustände einer Radareinrichtung. Die Erfindung betrifft ferner eine Radareinrichtung.

### Stand der Technik

Für Radareinrichtungen gibt es zahlreiche Anwendungen auf den verschiedensten Gebieten der Technik. Beispielsweise ist für die Nahbereichssensorik in Kraftfahrzeugen der Einsatz von Radar-Sensoren möglich.

Grundsätzlich werden bei Radareinrichtungen elektromagnetische Wellen von einer Sendeantenne abgestrahlt. Treffen diese elektromagnetischen Wellen auf ein Hindernis, so werden sie reflektiert und nach der Reflektion von einer anderen oder derselben Antenne wieder empfangen. Nachfolgend werden die empfangenen Signale einer Signalverarbeitung und Signalauswertung zugeführt.

Beispielsweise werden in Kraftfahrzeugen Radarsensoren für die Messung des Abstands zu Zielen und/oder der Relativgeschwindigkeit bezüglich solcher Ziele außerhalb des Kraftfahrzeuges eingesetzt. Als Ziele kommen zum Beispiel vorausfahrende oder parkende Kraftfahrzeuge, Fußgänger, Radfahrer oder Einrichtungen im Umfeld des Fahrzeuges in Frage.

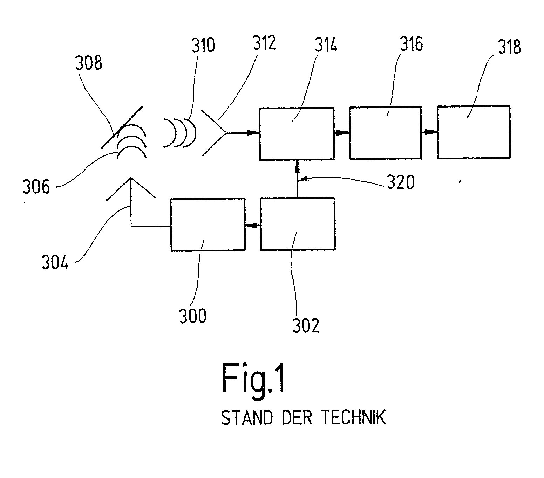

Figur 1 zeigt eine schematische Darstellung einer Radareinrichtung mit einem Korrelationsempfänger des Standes der Technik. Ein Sender 300 wird durch eine Pulserzeugung 302 veranlasst, über eine Antenne 304 ein Sendesignal 306 abzustrahlen. Das Sendesignal 306 trifft auf ein Zielobjekt 308, wo es reflektiert wird. Das Empfangssignal 310 wird von der Antenne 312 empfangen. Diese Antenne 312 kann mit der Antenne 304 identisch sein. Nach dem Empfang des Empfangssignals 310 durch die Antenne 312 wird dieses dem Empfänger 314 übermittelt und nachfolgend über eine Einheit 316 mit Tiefpass und Analog/Digital-Wandlung einer Signalauswertung 318 zugeführt. Die Besonderheit bei dem Korrelationsempfänger besteht darin, dass der Empfänger 314 von der Pulserzeugung 302 ein Referenzsignal 320 erhält. Die von dem Empfänger 314 empfangenen Empfangssignale 310 werden in dem Empfänger 314 mit dem Referenzsignal 320 gemischt. Durch die Korrelation kann auf der Grundlage der zeitlichen Verzögerung vom Aussenden bis zum Empfangen der Radarimpulse beispielsweise auf die Entfernung eines Zielobjektes geschlossen werden.

Es ist möglich, an einem Fahrzeug beispielsweise zwischen 4 und 16 gleichartige Sensoren zu betreiben. Diese sind räumlich in einer Weise angeordnet, dass sie sich gegenseitig praktisch nicht beeinflussen. Nähert man sich jedoch anderen Fahrzeugen, wie etwa bei einem Einparkvorgang oder beim Stop & Go, so können Störungen auftreten.

Ebenfalls ist es möglich, dass Störungen durch andersartige Funkdienste auftreten, so dass auf diese Weise scheinbare Ziele erzeugt werden. Ein solches fehlerhaftes Erkennen eines scheinbaren Ziels ist nachteilig und kann mitunter sogar zu Risiken während des Fahrbetriebs führen.

### Vorteile der Erfindung

Die Erfindung besteht in einem Verfahren zum Erkennen gestörter Zustände einer Radareinrichtung mit den Schritten: Erkennen von Unregelmäßigkeiten beim Empfang von Signalen, Deaktivieren des Sendezweigs und Erkennen der An- oder Abwesenheit von Zielsignalen. Wird im Rahmen des erfindungsgemäßen Verfahrens also erkannt, dass Unregelmäßigkeiten im Empfangsteil auftreten, beispielsweise sehr schnell wechselnde Ziele, Ziele mit hohen Geschwindigkeiten oder Ziele mit sich sprunghaft ändernden Entfernungen, so wird angenommen, dass eine Störung vorliegt. Ebenfalls kann eine Störung darin bestehen, dass der Sensor blind ist, das heißt überhaupt keine Ziele mehr erkennt. In diesen Fällen wird der Sendezweig der Radareinrichtung abgeschaltet oder allgemeiner formuliert, es wird vermieden, dass ein Sendesignal von der Radareinrichtung ausgesendet wird. Die Korrelationspulse werden jedoch weiterhin auf den Mischer des Empfangszweigs gegeben. Nun wird im Rahmen des erfindungsgemäßen Verfahrens ermittelt, ob bei deaktiviertem Sender Zielinformationen nach wie vor erfasst werden. Ist dies der Fall, so wird auf eine Störung geschlossen. Es ist also möglich, zunächst durch das Feststellen von Unregelmäßigkeiten und die nachfolgende Prüfung auf eine fehlerhafte Zielinformation rückzuschließen.

Vorzugsweise werden im Anschluss an das Erkennen der Anwesenheit von Zielsignalen diese auf Softwarebasis eliminiert. Dies ist insbesondere dann möglich, wenn statische Informationen vorliegen, etwa die Information, dass sich ein Ziel in einer bestimmten Entfernung befindet.

Das erfindungsgemäße Verfahren kann jedoch auch dadurch in vorteilhafter Weise weitergebildet sein, dass im Anschluss an das Erkennen der Anwesenheit von Zielsignalen diese durch eine Veränderung der Mittenfrequenz der Radareinrichtung eliminiert werden. Diese Variante kommt insbesondere für das Eliminieren deterministisch veränderlicher Ziele zum Einsatz. Für eine Veränderung der Mittenfrequenz kommt beispielsweise eine periodische oder ein chaotische Verschiebung in Frage.

Es kann ebenfalls nützlich sein, dass das erfindungsgemäße Verfahren in der Weise durchgeführt wird, dass im Anschluss an das Erkennen der Anwesenheit von Zielsignalen diese durch eine Veränderung der Pulswiederholfrequenz der Radareinrichtung eliminiert werden. Auch hierdurch ist es möglich, die Radareinrichtung in der Weise zu verändern, dass Scheinziele nicht mehr nachgewiesen werden, wobei echte Ziele jedoch unverändert berücksichtigt werden.

Ebenfalls kann vorteilhaft sein, dass im Anschluss an das Erkennen der Anwesenheit von Zielsignalen diese durch einen Notchfilter eliminiert werden. Dies ist insbesondere nützlich, wenn die Störung monochromatisch oder nahezu monochromatisch ist. Die störenden Frequenzen werden durch den Notchfilter eliminiert, so dass es letztlich zu einem störungsfreien Radarbetrieb kommt.

Es kann ebenfalls von Vorteil sein, wenn das erfindungsgemäße Verfahren so weitergebildet ist, dass im Anschluss an das Erkennen der Anwesenheit von Zielsignalen diese durch Pulscodierung eliminiert werden. Beispielsweise kommt die Umschaltung von Pulsmodulation auf Frequenzmodulation in Frage. Ebenfalls ist es denkbar, die Pulse mittels eines PN-Codierverfahrens (PN: "Pseudo Noise") zu codieren.

Nützlicherweise kann das Verfahren auch so fortgebildet sein, dass im Anschluss an das Erkennen der An- oder Abwesenheit von Zielsignalen ein Dauerträgersignal auf einen Mischer im Empfangszweig gegeben wird und mittels Verstimmen des Dauerträgersignals die Störträgerfrequenz bestimmt wird. Dies ist insbesondere vorteilhaft, wenn sporadische Signale vorliegen. Durch den Dauerträger am Mischer im Empfangszweig können die empfangenen Signale auf eine niedrige Frequenzlage, beispielsweise in einen Bereich unterhalb von 2 GHz umgesetzt werden. Durch Verstimmung der Frequenz kann die Störträgerfrequenz bestimmt werden.

In vergleichbarer Weise kann das Verfahren so ausgeführt werden, dass im Anschluss an das Erkennen der An- oder Abwesenheit von Zielsignalen mittels Durchstimmen einer PLL-Quelle die Störträgerfrequenz bestimmt wird. Die Bereitstellung einer derartigen PLL-Quelle im Empfangszweig macht einen variablen Träger entbehrlich. Allerdings ist ein erhöhter Schaltungsaufwand in dem betreffenden Frequenzbereich, beispielsweise im Bereich von 2 GHz, erforderlich.

Vorzugsweise wird im Falle des Nichteliminierens der Störsignale die Messung als ungültig erklärt. Lassen sich also durch die im Rahmen des erfindungsgemäßen Verfahrens ausgeführten Maßnahmen die Störziele nicht beseitigen, so wird die gesamte Messung verworfen, so dass das Verfahren letztlich eine zuverlässige Bestimmung von echten Zielen und ein Eliminieren von Scheinzielen ermöglicht.

Die Erfindung betrifft ferner eine Radareinrichtung mit Mitteln zum Erkennen von Unregelmäßigkeiten beim Empfang von Signalen, Mitteln zum Deaktivieren des Sendezweigs und Mitteln zum Erkennen der An- oder Abwesenheit von Zielsignalen. Mit einer derartigen Radareinrichtung lassen sich die erfindungsgemäßen Vorteile des Verfahrens zum Erkennen gestörter Zustände umsetzen.

Die Radareinrichtung ist besonders nützlich, wenn im Anschluss an das Erkennen der Anwesenheit von Zielsignalen diese auf Softwarebasis eliminierbar sind. Insbesondere können fehlerhafte statische Informationen bei einer derartigen Auslegung der Radareinrichtung eliminiert werden.

Die erfindungsgemäße Radareinrichtung ist in vorteilhafter Weise dadurch weitergebildet, dass im Anschluss an das Erkennen der Anwesenheit von Zielsignalen diese durch eine Veränderung der Mittenfrequenz der Radareinrichtung eliminierbar sind. Die Mittenfrequenz kann periodisch oder chaotisch verändert werden. Dies dient vorzugsweise dem Eliminieren deterministisch veränderlicher Ziele.

In einer bevorzugten Ausführungsform der Radareinrichtung kann es auch nützlich sein, dass im Anschluss an das Erkennen der Anwesenheit von Zielsignalen diese durch eine Veränderung der Pulswiederholfrequenz der Radareinrichtung eliminierbar sind. Dies ist eine weitere Variante zum Eliminieren von Scheinzielen, wobei hier jedoch als wesentliche Maßnahme eine Veränderung der Pulswiederholfrequenz vorgenommen wird.

Ebenfalls kann vorgesehen sein, dass im Anschluss an das Erkennen der Anwesenheit von Zielsignalen diese durch einen Notchfilter eliminierbar sind. Eine derartige Radareinrichtung kann insbesondere monochromatische Störungen eliminieren.

In einer weiteren bevorzugten Ausführungsform der erfindungsgemäßen Radareinrichtung kann von Vorteil sein, dass im Anschluss an das Erkennen der Anwesenheit von Zielsignalen diese durch Pulscodierung eliminierbar sind. Für die Pulscodierung können unterschiedliche Modulationsverfahren verwendet werden, sowohl einzeln als auch in Kombination.

Die Radareinrichtung ist vorteilhaft dadurch weitergebildet, dass im Anschluss an das Erkennen der An- oder Abwesenheit von Zielsignalen ein Dauerträgersignal auf einen Mischer im Empfangszweig gegeben wird und mittels Verstimmen des Dauerträgersignals die Störträgerfrequenz bestimmbar ist. Da sporadische Signale durch die beschriebenen Veränderungen der Signale nicht eliminierbar sind, kann die Radareinrichtung so ausgelegt sein, dass durch einen Dauerträger am Mischer im Empfangszweig die empfangenen Signale auf eine niedrige Frequenzlage, beispielsweise in einen Bereich unterhalb von 2 GHz umgesetzt werden. Durch Verstimmung der Frequenz kann die Störträgerfrequenz bestimmt werden.

In einer weiteren Ausführungsform kann es jedoch auch nützlich sein, dass im Anschluss an das Erkennen der Anoder Abwesenheit von Zielsignalen mittels Durchstimmen einer PLL-Quelle die Störträgerfrequenz bestimmbar ist. Diese Maßnahme ist vergleichbar mit dem Verstimmen der Dauerträgerfrequenz am Mischer im Empfangszweig. Durch die Bereitstellung einer PLL-Quelle kann eine variable Trägerfrequenz jedoch entbehrlich sein.

Vorzugsweise wird im Falle des Nichteliminierens der Störsignale die Messung als ungültig erklärt. Scheitern die Maßnahmen zum Eliminieren der Störsignale, so wird die gesamte Messung verworfen. Die Radareinrichtung ermöglicht letztlich also eine zuverlässige Bestimmung von echten Zielen und ein Eliminieren von Scheinzielen.

Der Erfindung liegt die überraschende Erkenntnis zugrunde, dass es durch das Erkennen von Unregelmäßigkeiten beim Empfang von Signalen und durch das nachfolgende Prüfen der Zielsignale bei Veränderung des Betriebs der Radareinrichtung möglich ist, Störsignale zu erkennen und zu eliminieren. Die Störerkennung kann ferner für Multi-Sensor-Plattformen zur gegenseitigen Synchronisation beziehungsweise Frequenzabstimmung der Sensoren untereinander genutzt werden. Die Erfindung lässt sich im Kfz-Bereich vorteilhaft einsetzten so dass letztlich Fahrkomfort und Fahrsicherheit erhöht werden.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine Radareinrichtung des Standes der Technik;
- Figur 2: ein Kraftfahrzeug mit Radareinrichtungen;
- Figur 3: Signale mit unterschiedlich starken Störungen;
- Figur 4: eine Radareinrichtung zur Durchführung der vorliegenden Erfindung;
- Figur 5: eine weitere Radareinrichtung zur Durchführung der vorliegenden Erfindung; und
- Figur 6: ein Flussdiagramm zur Erläuterung eines erfindungsgemäßen Verfahrens.

### Beschreibung der Ausführungsbeispiele

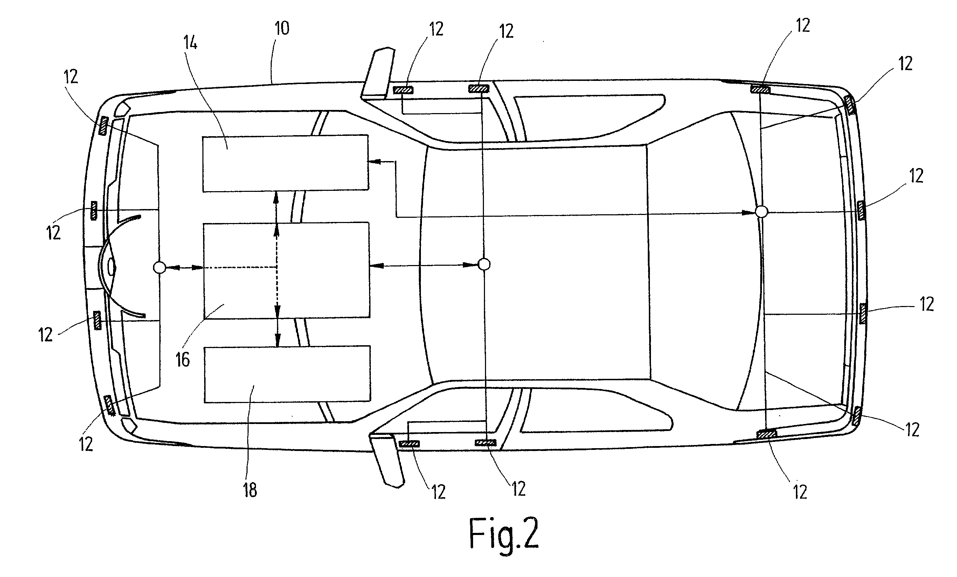

In Figur 2 ist ein Kraftfahrzeug 10 dargestellt, an welchem mehrere Radarsensoren 12 angeordnet sind. Die Radarsensoren sind über ein Buskonzept untereinander und mit Steuerungs- und Kontrolleinheiten verbunden, wobei insbesondere eine Einheit 14 zur Bereitstellung einer Einparkhilfe und zur Detektion eines toten Winkels, eine Einheit 16 für die Precrash-Funktion und eine Einheit 18 für Stop & Go vorgesehen sind.

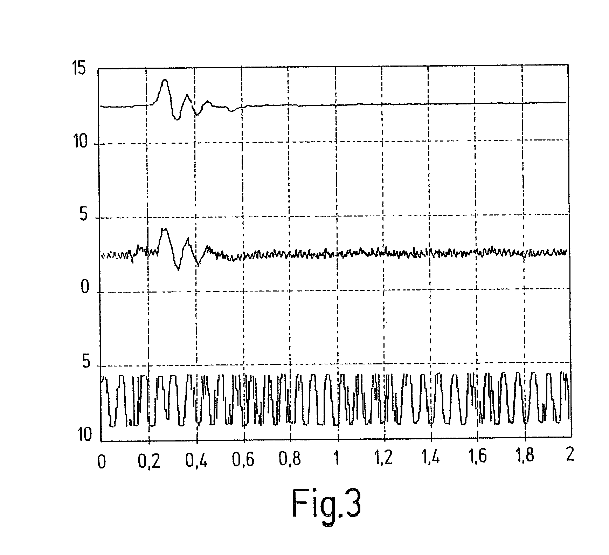

Figur 3 zeigt Signalverläufe, welche von einer im Nahbereich arbeitenden Radareinrichtung aufgenommen worden sind. Der obere Signalverlauf ist ungestört. Der mittlere Signalverlauf ist durch eine starke Störung beeinflusst, welche im vorliegenden Fall beispielhaft von einem FMCW-Radar verursacht wird. Das untere Signal ist durch eine sehr starke Störung vom selbem Typ beeinflusst.

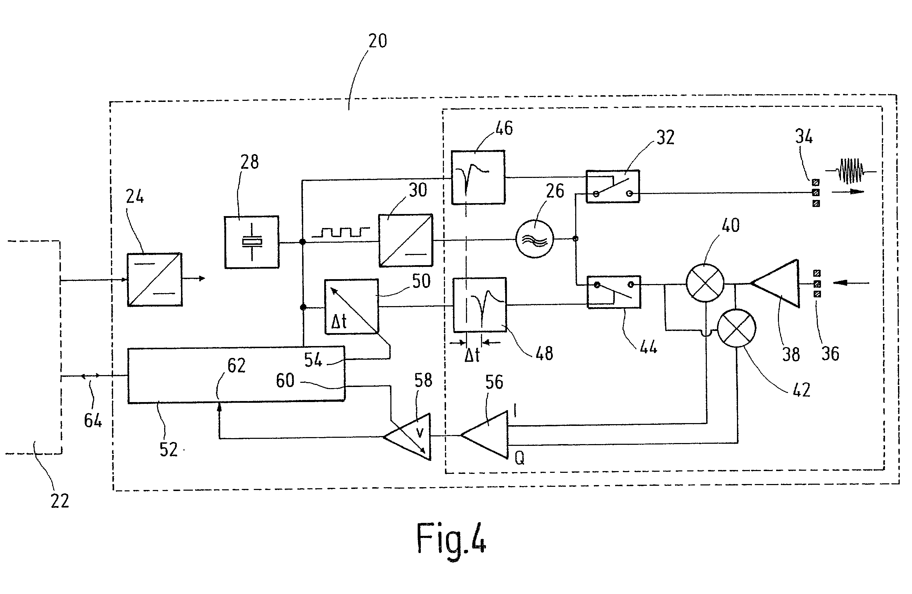

Figur 4 zeigt schematisch den Aufbau eines Sensors 20, welcher im Radarnahbereich eingesetzt wird. Dem Sensor 20 wird von einer elektronischen Steuerungseinheit 22 eine Spannung zur Verfügung gestellt, beispielsweise eine Spannung von 8 V. Diese Spannung wird in einem DC-DC-Wandler 24 transformiert, so dass letztlich die Versorgungsspannung für die Sensorkomponenten zur Verfügung gestellt wird, beispielsweise 5 V. Eine Trägerfrequenz von beispielsweise 24 GHz wird von einem Lokaloszillator 26 geliefert. Dieser Lokaloszillator 26 wird mit einer Vorspannung versorgt, welche letztlich aus den von einem Taktgenerator 28 zur Verfügung gestellten Pulsen mittels eines Wandlers 30 erzeugt wird. Die von dem Taktgenerator 28 erzeugten Pulse, die beispielsweise eine Frequenz von 5 MHz aufweisen können, werden zur Modulation der von dem Lokaloszillator 26 zur Verfügung gestellten Trägersignale verwendet. Diese Modulation erfolgt in dem Sendezweig durch den Schalter 32, welcher von einem Impulsformer 46 geschaltet wird. Der Impulsformer 46 wird wiederum von der Taktfrequenz des Taktgenerators 28 angesteuert. Die so erzeugten gepulsten Signale werden von der Antenne 34 ausgesendet. Im Falle einer Reflektion der Signale, welche von der Antenne 34 ausgesendet werden, werden diese von der Empfangsantenne 36 empfangen. Nach Verstärkung der empfangenen Signale in einem Verstärker 38 werden die Signale zwei Mischern 40, 42 zugeführt, wobei ein erster Mischer 40 ein I-Signal liefert, während der zweite Mischer 42 ein Q-Signal ausgibt. In den Mischern 40, 42 werden die empfangenen Signale mit den gepulsten Signalen des Lokaloszillators 26 gemischt, wobei dieses Pulsen über einen Schalter 44 erfolgt. Der Schalter wird von einem Impulsgeber 48 angesteuert, welcher bezüglich der von dem Impulsgeber 46 ausgegebenen Impulse um eine Verzögerung Δt verzögerte Impulse ausgibt. Diese Verzögerung wird durch eine Verzögerungsschaltung 50 zur Verfügung gestellt. Über einen Microcontroller 52, welcher einen digitalen Signalprozessor aufweist wird die Verzögerung der Verzögerungsschaltung 50 beeinflusst. Dies erfolgt über einen ersten analogen Ausgang 54 des Microcontrollers 52. Über einen zweiten analogen Ausgang 60 werden die von einem Verstärker 56 verarbeiteten I- beziehungsweise Q-Signale durch weitere variable Verstärkung in dem Verstärker 58 beeinflusst. Die Beeinflussung dieses variablen Verstärkers 58 erfolgt mittels eines zweiten analogen Ausgangs 60 des Microcontrollers 52. Das Ausgangssignal des variablen Verstärkers 58 wird einem analogen Eingang 62 des Microcontrollers 52 zugeführt. Der Microcontroller 52 kommuniziert über einen Eingabe-Ausgabe-Bus 64 (I/O-Bus) mit der elektronischen Steuerungseinheit 22.

Wird nun im Rahmen des erfindungsgemäßen Verfahrens erkannt, dass beim Empfang von Signalen Unregelmäßigkeiten auftreten, so wird der Sendezweig des Radarsensors 20 gemäß Figur 4 deaktiviert. Somit werden keine Sendesignale mehr von der Sendeantenne 34 ausgesendet. Allerdings werden weiterhin Korrelationspulse von dem Impulsgeber 48 auf den Empfangszweig des Radarsensors 20 gegeben. Stellt sich in diesem Zustand, bei dem der Sendezweig abgeschaltet ist, heraus, dass nach wie vor Zielinformation empfangen wird, so kann daraus auf ein Scheinsignal geschlossen werden. Treten statische Zielinformationen auf, so können diese durch Software, beispielsweise in der elektronischen Steuerungseinheit 22 eliminiert werden. Deterministisch veränderliche Ziele können durch eine andere Wahl der Mittenfrequenz des Lokaloszillators 26 oder der Pulswiederholfrequenz, welche von dem Taktgenerator 28 zur Verfügung gestellt wird, beseitigt werden. Treten sporadische Signale auf, so können diese nicht allein durch die bislang beschriebenen Maßnahmen berücksichtigt werden. Dem wird dadurch Rechnung getragen, dass an die Mischer 40, 42 ein Dauerträger angelegt wird, wodurch die empfangenen Signale auf eine niedrigere Frequenzlage umgesetzt werden. Durch Verstimmung der Trägerfrequenz kann die Störträgerfrequenz bestimmt werden.

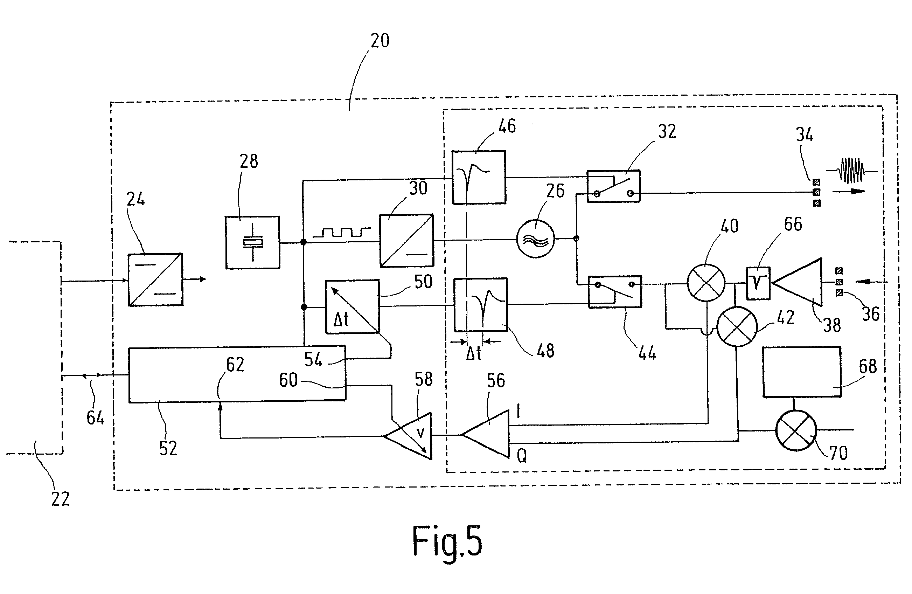

In Figur 5 ist eine Schaltung dargestellt, welche weitgehend der Schaltung gemäß Figur 4 entspricht. Zusätzlich ist im Empfangszweig ein Notchfilter 66 vorgesehen. Dieses kann insbesondere dann vorteilhaft zum Einsatz kommen, wenn monochromatische oder nahezu monochromatische Störungen vorliegen. Die Schaltung gemäß Figur 5 ist ferner zusätzlich zu den Komponenten gemäß Figur 4 mit einer PLL-Schaltung 68 und einem zusätzlichen Mischer 70 ausgestattet. Mittels eines Durchstimmens dieser PLL-Quelle 68 kann die Störfrequenz bestimmt werden, das heißt auf der Grundlage der Anordnung gemäß Figur 5 ist es nicht mehr erforderlich, die Trägerfrequenz zu verstimmen.

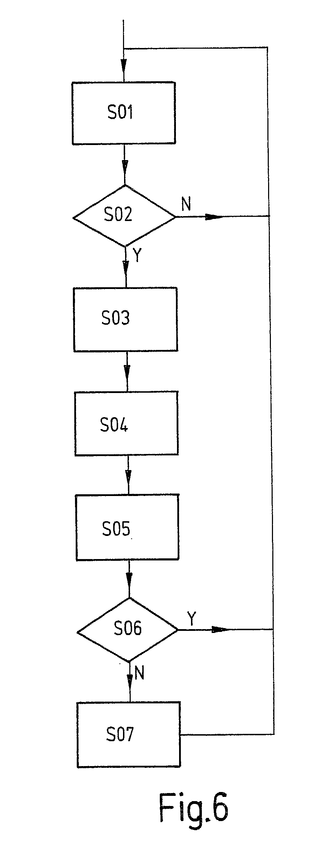

Figur 6 zeigt ein Flussdiagramm zur Erläuterung eines erfindungsgemäßen Verfahrens.

Zunächst wird die Bedeutung der dargestellten Verfahrensschritte aufgelistet:
- S01:: Normalbetrieb.
- S02:: Unregelmäßigkeiten? Blindheit?
- S03:: Sender abschalten; gepulster Empfang oder Dauerempfang.
- S04:: Analyse der Störung.
- S05:: Versuch, Störung zu eliminieren.
- S06:: Störung eliminiert?
- S07:: Messung ungültig.

Ausgehend vom Normalbetrieb in Schritt S01 wird in Schritt S02 geprüft, ob Unregelmäßigkeiten beim Empfang vorliegen oder ob der Sensor blind ist. Ebenfalls kann als Störerkennung die CFAR-Methode eingesetzt werden (CFAR = "constant false alarm rate"). Dabei wird in einem bestimmten Fenster die Rauschamplitude gemessen. Die Auswertestelle wird dabei so gewählt, dass das Signal-Rauschverhältnis konstant bleibt. Eine Erhöhung des Rauschanteils kann dann als Störerkennung interpretiert werden. Wird in Schritt S02 erkannt, dass keine Unregelmäßigkeiten und keine Blindheit vorliegen, so geht der Programmablauf in den Normalbetrieb über. Im anderen Fall, das heißt es liegen Unregelmäßigkeiten beziehungsweise eine Blindheit des Sensors vor, so wird in Schritt S03 der Sender deaktiviert. Weiterhin erfolgt ein gepulster Empfang beziehungsweise ein Dauerempfang. In Schritt S04 wird nachfolgend die vorliegende Störung analysiert. Im Anschluss daran wird in Schritt S05 versucht, die Störung zu eliminieren. Dies kann beispielsweise durch Änderung der Mittenfrequenz, durch Änderung der Pulswiederholfrequenz, durch einen Notchfilter oder durch eine Änderung des Modulationsschemas erfolgen. Die Eliminierung von Störsignalen kann ebenfalls auf Softwarebasis erfolgen. In Schritt S06 wird überprüft, ob die Störung eliminiert wurde. Ist dies der Fall, so kann zu Normalbetrieb übergegangen werden. Im anderen Fall wird in Schritt S07 die Messung für ungültig erklärt.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Erkennen gestörter Zustände einer Radareinrichtung mit den Schritten:
- Erkennen von Unregelmäßigkeiten beim Empfang von Signalen (S02),
- Deaktivieren des Sendezweigs (S03) und
- Erkennen der An- oder Abwesenheit von Zielsignalen (S04).

2. Verfahren nach Anspruch 1, bei dem im Anschluss an das Erkennen der Anwesenheit von Zielsignalen diese auf Softwarebasis eliminiert werden (S05).

3. Verfahren nach Anspruch 1 oder 2, bei dem im Anschluss an das Erkennen der Anwesenheit von Zielsignalen diese durch eine Veränderung der Mittenfrequenz der Radareinrichtung eliminiert werden (S05).

4. Verfahren nach einem der vorangehenden Ansprüche, bei dem im Anschluss an das Erkennen der Anwesenheit von Zielsignalen diese durch eine Veränderung der Pulswiederholfrequenz der Radareinrichtung eliminiert werden (S05).

5. Verfahren nach einem der vorangehenden Ansprüche, bei dem im Anschluss an das Erkennen der Anwesenheit von Zielsignalen diese durch einen Notchfilter (66) eliminiert werden (S05).

6. Verfahren nach einem der vorangehenden Ansprüche, bei dem im Anschluss an das Erkennen der Anwesenheit von Zielsignalen diese durch Pulscodierung eliminiert werden (S05).

7. Verfahren nach einem der vorangehenden Ansprüche, bei dem im Anschluss an das Erkennen der An- oder Abwesenheit von Zielsignalen
- ein Dauerträgersignal auf einen Mischer (40, 42) im Empfangszweig gegeben wird (S03) und
- mittels Verstimmen des Dauerträgersignals die Störfrequenz bestimmt wird (S04).

8. Verfahren nach einem der vorangehenden Ansprüche, bei dem im Anschluss an das Erkennen der An- oder Abwesenheit von Zielsignalen mittels Durchstimmen einer PLL-Quelle (68) die Störträgerfrequenz bestimmt wird.

9. Verfahren nach einem der vorangehenden Ansprüche, **dadurch gekennzeichnet, dass** im Falle des Nichteliminierens der Störsignale die Messung als ungültig erklärt wird (S07).

10. Radareinrichtung mit
- Mitteln zum Erkennen von Unregelmäßigkeiten beim Empfang von Signalen,
- Mitteln zum Deaktivieren des Sendezweiges und
- Mitteln zum Erkennen der An- oder Abwesenheit von Zielsignalen.

11. Radareinrichtung nach Anspruch 10, bei der im Anschluss an das Erkennen der Anwesenheit von Zielsignalen diese auf Softwarebasis eliminierbar sind.

12. Radareinrichtung nach Anspruch 10 oder 11, bei der im Anschluss an das Erkennen der Anwesenheit von Zielsignalen diese durch eine Veränderung der Mittenfrequenz der Radareinrichtung eliminierbar sind (S05).

13. Radareinrichtung nach einem der Ansprüche 10 bis 12, bei der im Anschluss an das Erkennen der Anwesenheit von Zielsignalen diese durch eine Veränderung der Pulswiederholfrequenz der Radareinrichtung eliminierbar sind (S05).

14. Radareinrichtung nach einem der Ansprüche 10 bis 13, bei der im Anschluss an das Erkennen der Anwesenheit von Zielsignalen diese durch einen Notchfilter (66) eliminierbar sind (S05).

15. Radareinrichtung nach einem der Ansprüche 10 bis 14, bei der im Anschluss an das Erkennen der Anwesenheit von Zielsignalen diese durch Pulscodierung eliminierbar sind (S05).

16. Radareinrichtung nach einem der Ansprüche 10 bis 15, bei der im Anschluss an das Erkennen der An- oder Abwesenheit von Zielsignalen
- ein Dauerträgersignal auf einen Mischer (40, 42) im Empfangszweig gegeben wird (S03) und
- mittels Verstimmen des Dauerträgersignals die Störfrequenz bestimmbar ist (S04).

17. Radareinrichtung nach einem der Ansprüche 10 bis 16, bei der im Anschluss an das Erkennen der An- oder Abwesenheit von Zielsignalen mittels Durchstimmen einer PLL-Quelle (68) die Störträgerfrequenz bestimmbar ist.

18. Radareinrichtung nach einem der Ansprüche 10 bis 17, **dadurch gekennzeichnet, dass** im Falle des Nichteliminierens der Störsignale die Messung als ungültig erklärt wird (S07).
